# EUROPÄISCHE PATENTANMELDUNG

(11) **EP 4 803 293 A1**
(43) Veröffentlichungstag der Anmeldung: **09.09.2026**
(21) Anmeldenummer: 25218089.8
(22) Anmeldetag: 24.11.2025
(51) Int. Cl.: B29C 70/70, B29D 24/00, B29D 99/00, B32B 3/12, B29C 53/06

(54) **VERFAHREN ZUM HERSTELLEN EINER GEBOGENEN VERBUNDPLATTE UND GEBOGENE VERBUNDPLATTE**

(30) Priorität: 04.03.2025 DE 102025108099
(71) Anmelder: Elbe Flugzeugwerke GmbH, 01109 Dresden (DE)
(72) Erfinder: Köllner, Markus, 01109 Dresden (DE); Böhme, Michael, 01109 Dresden (DE); Graf, Sebastian, 01109 Dresden (DE)
(74) Vertreter: LKGLOBAL Partnerschaftsgesellschaft mbB

(57) **Zusammenfassung**

Ein Verfahren zum Herstellen einer gebogenen Verbundplatte umfasst: Bereitstellen eines Verbundplattenrohlings (9) mit einer ersten Deckschicht (20), einer zweiten Deckschicht (30) und einer Kernschicht (40); Anordnen eines ersten Druckkörpers (50) auf einer ersten Oberfläche (12) der ersten Deckschicht; Ausüben einer Druckkraft (45) auf den ersten Druckkörper (50), um hierdurch eine Vertiefung (21) in der ersten Oberfläche (12) zu bilden; Aushärten des Verbundplattenrohlings (9), um eine Verbundplatte (10) zu erhalten; Entfernen des ersten Druckkörpers (50); Bilden einer ersten Ausnehmung (55) in der Vertiefung (21) durch Abtragen der ersten Deckschicht (20) und der Kernschicht (40); Überführen der Verbundplatte (10) in einen verformten Zustand; Anordnen eines ersten Kernschichteinsatzes (60) in der ersten Ausnehmung (55) und Verbinden des ersten Kernschichteinsatzes (60) mit der zweiten Deckschicht (30) und der Kernschicht (40); Anordnen eines ersten Deckschichteinsatzes (70) auf dem ersten Kernschichteinsatz (60); Verbinden des ersten Deckschichteinsatzes (70) mit dem ersten Kernschichteinsatz (60) und der ersten Oberfläche (12).

## Beschreibung

### Technisches Gebiet

Die vorliegende Beschreibung betrifft im Allgemeinen ein Verfahren zum Herstellen einer gebogenen Verbundplatte und eine gebogene Verbundplatte, die durch ein solches Verfahren hergestellt werden kann.

### Technischer Hintergrund

Verbundplatten bestehen im Allgemeinen aus einem Kern oder einer Kernschicht und zwei Deckschichten. Die Kernschicht ist zwischen den beiden Deckschichten angeordnet und mit diesen verbunden, beispielsweise verklebt. Die Kernschicht ist bevorzugt aus einem an sich leichten Material ausgestaltet, beispielsweise als Wabenstruktur oder als Schaum. Die Wabenstruktur kann verstärkt sein, beispielsweise indem die Wabenstruktur mit einem Harz getränkt ist. Die Deckschichten sind mit der Kernschicht verbunden, beispielsweise verklebt. Die Deckschichten sind bevorzugt ebenfalls aus einem an sich leichten Material ausgestaltet, beispielsweise aus einem faserhaltigen Material oder einem Faserverbundwerkstoff. Auf diese Weise wird eine Verbundplatte mit einem sehr guten Festigkeits-Gewichts-Verhältnis bereitgestellt, d. h. die Verbundplatte weist eine hohe mechanische Festigkeit bei einem sehr niedrigen Eigengewicht auf. Somit eignen sich solche Verbundplatten insbesondere für die Verwendung im Leichtbau, beispielsweise im Fahrzeugbau, insbesondere dem Luftfahrzeugbau.

Beispielsweise werden Verbundplatten im Luftfahrzeugbau als Boden- oder Wandpanel verwendet. Es kann gefordert sein, eine gebogene Verbundplatte bereitzustellen, um sie dem Raum anzupassen, in dem eine Verbundplatte eingebaut werden soll oder um eine gewünschte Geometrie in einem Raum zu erhalten. Damit die strukturelle Integrität, und insbesondere die mechanische Festigkeit, einer gebogenen Verbundplatte im Wesentlichen einer nicht gebogenen Verbundplatte entspricht und eine gebogene Verbundplatte eine nahezu identische Belastbarkeit wie eine nicht gebogene Verbundplatte aufweist, müssen entweder technisch anspruchsvolle und kostenintensive Verfahren eingesetzt werden oder eine gebogene Verbundplatte weist im Vergleich zu einer nicht gebogenen Verbundplatte ein deutlich höheres Gewicht auf. Insbesondere ein nachträgliches Modifizieren von Verbundplatten ist technisch sehr anspruchsvoll, da ein nachträgliches Bearbeiten, insbesondere der Kernschicht, von Verbundplatten die strukturelle Integrität und damit die gewünschten Eigenschaften negativ beeinflusst.

### Beschreibung

Es kann als Aufgabe betrachtet werden, ein Verfahren, mit dem eine gebogene Verbundplatte hergestellt werden kann, und eine gebogene Verbundplatte, die durch ein solches Verfahren hergestellt wird, anzugeben, um zumindest einige, idealerweise alle der oben erwähnten Nachteile der Verfahren und/oder gebogenen Verbundplatten zu mindern und idealerweise vollständig zu überwinden.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Gemäß einem ersten Aspekt wird ein Verfahren zum Herstellen einer gebogenen Verbundplatte angegeben. Das erfindungsgemäße Verfahren umfasst die Schritte: das Bereitstellen eines Verbundplattenrohlings, wobei der Verbundplattenrohling eine erste Deckschicht mit einer ersten Oberfläche, eine zweite Deckschicht mit einer zweiten Oberfläche und eine Kernschicht umfasst; das Anordnen eines ersten Druckkörpers auf der ersten Oberfläche; das Ausüben einer Druckkraft auf den ersten Druckkörper, um hierdurch eine erste Vertiefung in der ersten Oberfläche zu bilden; das Aushärten des Verbundplattenrohlings, um eine Verbundplatte zu erhalten; das Entfernen des ersten Druckkörpers; das Bilden einer ersten Ausnehmung in einem Bereich der ersten Vertiefung durch Abtragen der ersten Deckschicht und der Kernschicht; das Überführen der Verbundplatte in einen verformten Zustand; das Anordnen eines ersten Kernschichteinsatzes in der ersten Ausnehmung und Verbinden des ersten Kernschichteinsatzes mit der zweiten Deckschicht und der Kernschicht; und das Anordnen eines ersten Deckschichteinsatzes auf dem ersten Kernschichteinsatz und Verbinden des ersten Deckschichteinsatzes mit dem ersten Kernschichteinsatz und der ersten Oberfläche, um die gebogene Verbundplatte zu erhalten.

Bei der Verbundplatte handelt es sich insbesondere um eine Leichtbauplatte mit einem sehr leichten Kern, der zwischen zwei Decklagen angeordnet ist. Der Kern besteht aus einem sehr leichten Material und ist ausgelegt, Druckkräfte in Richtung der Normalen der Verbundplatte sowie aus einer Durchbiegung in Folge solcher Druckkräfte resultierende Kräfte (Schubkräfte) aufzunehmen. Der Kern kann beispielsweise eine Wabenstruktur oder ein Kunststoffschaum sein. Die Decklagen nehmen Zug- und Druckkräfte in der Ebene der Verbundplatte auf. Somit kann eine Verbundplatte bei einem sehr niedrigen Eigengewicht sehr hohen Belastungen standhalten. Üblicherweise erstreckt sich eine Verbundplatte hierbei in einer Ebene. Bei einer gebogenen Verbundplatte ragt ein Abschnitt der Verbundplatte aus dieser Ebene hervor.

Bei dem Verbundplattenrohling handelt es sich um eine Vorstufe einer Verbundplatte innerhalb eines Fertigungsprozesses, insbesondere handelt es sich um eine Vorstufe einer Verbundplatte, bevor dieser ausgehärtet wurde. Durch ein Aushärten erhält die Verbundplatte ihre finale Form und ist insbesondere geeignet, die oben beschriebenen Kräfte aufzunehmen. Der Verbundplattenrohling weist die ausgehärtete Kernschicht auf, wobei die Kernschicht zwischen einer ersten und einer zweiten Deckschicht angeordnet ist, die noch nicht ausgehärtet sind. Der Verbundplattenrohling weist damit eine erste Oberfläche und eine gegenüberliegende zweite Oberfläche auf. Der Schritt des Bereitstellens des Verbundplattenrohlings bedeutet, dass der Verbundplattenrohling vorgefertigt vorliegt und stellt den Ausgangspunkt des erfindungsgemäßen Verfahrens dar.

Bei dem ersten Druckkörper handelt es um einen Gegenstand, der auf der ersten Oberfläche angeordnet wird. Prinzipiell ist die Geometrie des Druckkörpers als solche nicht beschränkt und kann eine Grundfläche aufweisen, die jeder zweidimensionalen geometrischen Form entspricht, beispielsweise, dreieckig, rechteckig, quadratisch, oder ein Polygon n-ter Ordnung, wobei n zwischen 5 und 20 liegt. In bevorzugten Ausführungsformen ist die Grundfläche des Druckkörpers rechteckig. Der Druckkörper ist insbesondere ein räumlicher Körper, wobei der Druckkörper ausgehend von seiner Grundfläche eine Höhe aufweist, bevorzugt sind Druckkörper mit einer Quaderform. Das Anordnen des Druckkörpers auf einer Oberfläche des Verbundplattenrohlings bedeutet, dass der Druckkörper so auf die erste Oberfläche gebracht wird, dass der Druckkörper mit einem Teil seiner Grundfläche in Kontakt mit der ersten Oberfläche ist. Der Druckkörper kann vollflächig mit seiner Grundfläche in Kontakt mit der ersten Oberfläche sein und entlang einer Breite der Verbundplatte angeordnet werden, wobei der Druckkörper nicht über die Verbundplatte hinausragt oder wobei der Druckkörper jeweils seitlich mit der Verbundplatte abschließt und die gesamte Breite der Verbundplatte abdeckt. Der Druckkörper kann mit seiner Grundfläche in Kontakt mit der ersten Oberfläche sein und entlang der Breite der Verbundplatte so angeordnet sein, dass er seitlich über die Verbundplatte hinausragt. Auf den Druckkörper wird dann eine Druckkraft ausgeübt, beispielsweise über eine Presse. Der Druckkörper ist hierzu aus einem Material gefertigt, welches so beschaffen ist, dass der Druckkörper durch die Druckkraft nicht verformt wird (der Druckkörper hat also eine höhere Festigkeit bzw. Härte als der Verbundplattenrohling in dem nicht ausgehärteten Zustand) und keine Stoffverbindung mit der Oberfläche eingeht. Beispielsweise ist der Druckkörper aus einem Metall gefertigt, bevorzugt aus einem Metall ausgewählt aus der Gruppe: Aluminium, Eisen, Edelstahl und/oder Mischungen davon. Durch die Druckkraft wird der Druckkörper in die Oberfläche des Verbundplattenrohlings gepresst. Hierbei kann der Druckkörper ganz oder teilweise, in Abhängigkeit der Höhe des Druckkörpers in die Oberfläche gedrückt oder gepresst werden, wobei die Vertiefung in der ersten Oberfläche gebildet wird.

Das Aushärten des Verbundplattenrohlings bedeutet, dass dem Rohling über einen vordefinierten Härtungszeitraum Energie zugeführt wird, beispielsweise in Form von Wärmeenergie, um die Materialzusammensetzung in einem vorgegebenen Zustand auszuhärten und seine Form damit beizubehalten. Während des Aushärtens verbleibt der Druckkörper auf der Oberfläche der entsprechenden Deckschicht.

Nachdem der Verbundplattenrohling ausgehärtet ist und eine Verbundplatte erhalten wird, wird der Druckkörper entfernt. Entfernen bedeutet, dass die gegebenenfalls noch anliegende Druckkraft auf den Druckkörper gelöst wird und der Druckkörper aus der gebildeten Vertiefung entnommen wird. Bevor der Druckkörper entfernt wird, kann die Anordnung über einen vordefinierten Kühlzeitraum aktiv oder passiv abgekühlt werden, z. B. bis die Verbundplatte Raumtemperatur erreicht hat.

Das Bilden einer ersten Ausnehmung in einem Bereich der ersten Vertiefung durch Abtragen der ersten Deckschicht und der Kernschicht kann beispielsweise durch Fräsen oder im weitesten Sinne durch Schneiden oder andere materialabtragende Verfahren erfolgen. Im Bereich der ersten Ausnehmung, wobei die erste Ausnehmung ein Teil der ersten Vertiefung ist, wird die gesamte Deckschicht und insbesondere die gesamte Kernschicht entfernt, wobei die zweite Deckschicht erhalten bleibt.

Das Überführen der Verbundplatte in einen verformten Zustand bedeutet, dass die Verbundplatte die Ausnehmung aufweist und seitlich von der Ausnehmung auf einen Abschnitt der Verbundplatte, oder jeweils auf beide Abschnitte seitlich der Ausnehmung, eine Kraft aufgebracht wird. Durch die Kraftaufbringung wird die Verbundplatte bevorzugt über die Ausnehmung als Biegungsachse so gebogen, dass ein Abschnitt der Verbundplatte aus der Ebene herausragt, die vorher von der gesamten Verbundplatte gebildet wurde. Der erste Abschnitt der Verbundplatte seitlich der Ausnehmung wird somit gegenüber dem zweiten Abschnitt der Verbundplatte auf der anderen Seite der Ausnehmung in einem vordefinierten Winkel angeordnet. Die Verbundplatte kann so gebogen werden, dass das Volumen der Ausnehmung durch das Biegen kleiner oder größer wird. In anderen Worten bedeutet dies, dass die Verbundplatte so gebogen werden kann, dass die zweite Deckschicht in der Biegungskurve radial innen oder außen liegt.

Bei dem Kernschichteinsatz handelt es sich um einen Körper, welcher geometrisch der Ausnehmung entspricht. Es ist besonders vorteilhaft, wenn der Kernschichteinsatz geringfügig kleiner dimensioniert ist als die Ausnehmung, da der Kernschichteinsatz so besonders einfach in der ersten Ausnehmung angeordnet werden kann. Der erste Kernschichteinsatz wird so in der Ausnehmung angeordnet, dass er mit der zweiten Deckschicht und der Kernschicht in Kontakt ist und verbunden werden kann. Das Anordnen des ersten Kernschichteinsatzes in der ersten Ausnehmung kann umfassen, dass der erste Kernschichteinsatz über den Bereich der ersten Vertiefung angeordnet wird, oder dass der Kernschichteinsatz seitlich der Verbundplatte über eine der beiden seitlichen Öffnungen der Ausnehmung eingebracht wird, beispielsweise hineingeschoben wird. Der Kernschichteinsatz weist in solchen Ausführungsformen eine Wabenstruktur auf. Der Kernschichteinsatz kann alternativ ein Schaummaterial sein, welches ebenfalls vorgefertigt sein kann und analog in der Ausnehmung angeordnet wird oder die Ausnehmung kann ausgeschäumt werden, wobei überstehender Schaum im Anschluss entfernt wird.

Bei dem ersten Deckschichteinsatz handelt es um einen flächigen Faserwerkstoff, der in seinem Material und seiner Beschaffenheit der ersten Deckschicht und der zweiten Deckschicht entspricht. Der erste Deckschichteinsatz ist so dimensioniert, dass er in Kontakt mit dem ersten Kernschichteinsatz und mit der ersten Oberfläche steht. Bevorzugt ist der Deckschichteinsatz so dimensioniert, dass er entlang der ersten Oberfläche die Vertiefung abdeckt, nachdem die Verbundplatte verformt wurde. Der Deckschichteinsatz ist bevorzugt auf einer Höhe mit der ursprünglichen Höhe der ersten Oberfläche. Zwischen dem Deckschichteinsatz, der Vertiefung und der ersten Oberfläche kann ein Spalt gebildet sein. Durch das Verbinden des Deckschichteinsatzes mit der ersten Oberfläche und dem Kernschichteinsatz wird die gebogene Verbundplatte erhalten. Eine Faserausrichtung des Deckschichteinsatzes kann einer Faserausrichtung der ersten Oberfläche entsprechen. Dies ist vorteilhaft, da eine Kraftübertragung effizienter über die gesamte Oberfläche geleitet bzw. verteilt werden kann.

Gemäß einer Ausführungsform wird der Schritt des Ausübens der Druckkraft auf den ersten Druckkörper vor und/oder während des Aushärtens des Verbundplattenrohlings durchgeführt.

Es kann vorteilhaft sein, eine Druckkraft auf den Druckkörper vor dem Aushärten auszuüben, da sich der Druckkörper so besonders einfach in die noch nicht ausgehärtete erste Oberfläche beispielsweise einpressen lässt. Es kann vorteilhaft sein, die Druckkraft auf dem Druckkörper zeitgleich mit dem Aushärten durchzuführen, da zu diesem Zeitpunkt der Rohling noch leicht verformbar ist und durch ein gleichzeitiges Ausüben der Druckkräften und einem beginnenden Aushärten das Verfahren zeitlich optimiert werden kann. Es kann vorteilhaft sein, bei dem Aushärten weiterhin eine Druckkraft auf den Druckkörper auszuüben, da der Druckkörper auf diese Weise während des Aushärtens in der gewünschten Position gehalten werden kann und die Vertiefungen besonders genau gefertigt werden können.

Gemäß einer weiteren Ausführungsform weist die erste Vertiefung einen ersten Übergangsbereich und einen zweiten Übergangsbereich auf, und die erste Ausnehmung weist eine Breite auf, die kleiner ist als ein Abstand zwischen dem ersten Übergangsbereich und dem zweiten Übergangsbereich.

Bei dem ersten Übergangsbereich und dem zweiten Übergangsbereich handelt es sich jeweils um Abschnitte der Vertiefung. Die Übergangsbereiche verlaufen ausgehend von der Vertiefung bis auf die ursprüngliche Höhe der ersten Oberfläche vor dem Ausüben der Druckkraft auf den Druckkörper. Die Übergangsbereiche erhalten ihre Form entsprechend durch die Form des Randbereiches des Druckkörpers, beispielsweise weisen die Übergangsbereiche als Kante der Vertiefung eine abgerundete Form auf. Beispielsweise können die Übergangsbereiche auch treppenartig mehrere Stufen aufweisen. Dies kann beispielsweise vorteilhaft sein, um eine größere Oberfläche zu erzielen, wodurch auch die Güte der Verbindung zwischen der ersten Oberfläche und dem Deckschichteinsatz verbessert werden kann.

Die Lage der Übergangsbereiche definiert die Breite der Ausnehmung, wobei die Breite der Ausnehmung kleiner ist als der Abstand zwischen dem ersten Übergangsbereich und dem zweiten Übergangsbereich.

Gemäß einer weiteren Ausführungsform ist die erste Ausnehmung zwischen einem ersten Kontaktbereich und einem zweiten Kontaktbereich angeordnet, wobei der erste Kontaktbereich an den ersten Übergangsbereich angrenzt und der zweite Kontaktbereich an den zweiten Übergangsbereich angrenzt.

Bei dem ersten Kontaktbereich und dem zweiten Kontaktbereich handelt es sich um Abschnitte der Vertiefung, insbesondere um Abschnitte der Vertiefung, welche nach dem Bilden der ersten Ausnehmung von der Vertiefung erhalten bleiben. Dementsprechend ist der erste Kontaktbereich zwischen dem ersten Übergangsbereich und der Ausnehmung angeordnet, analog ist der zweite Kontaktbereich zwischen dem zweiten Übergangsbereich und der Ausnehmung angeordnet. Der erste Kontaktbereich und der zweite Kontaktbereich entsprechen damit auch einem Abschnitt der ersten Oberfläche. Bevorzugt sind der erste Kontaktbereich und der zweite Kontaktbereich in derselben Ebene angeordnet.

Die Oberfläche des ersten Kontaktbereichs und des zweiten Kontaktbereichs werden durch die Oberfläche des ersten Druckkörpers bestimmt und sind bevorzugt eben. Die Oberflächen der ersten Kontaktfläche und der zweiten Kontaktfläche können auch uneben sein, wobei dies vorteilhaft sein kann, da eine vergrößerte Oberfläche gebildet werden kann. Die erste Kontaktfläche und die zweite Kontaktfläche weisen jeweils eine Breite ausgehend von der Ausnehmung bis zu dem entsprechenden ersten Übergangsbereich bzw. zweiten Übergangsbereich zwischen 1 cm bis 10 cm, bevorzugt 1,5 cm bis 7,5 cm, bevorzugter 2 cm bis 5 cm auf.

Gemäß einer weiteren Ausführungsform wird der erste Deckschichteinsatz mit dem ersten Kernschichteinsatz, dem ersten Kontaktbereich und dem zweiten Kontaktbereich verbunden.

Das Verbinden des ersten Deckschichteinsatzes mit dem ersten Kernschichteinsatz, dem ersten Kontaktbereich und dem zweiten Kontaktbereich kann in einer beliebigen Reihenfolge durchgeführt werden. Der erste Deckschichteinsatz kann gleichzeitig mit dem ersten Kernschichteinsatz, dem ersten Kontaktbereich und dem zweiten Kontaktbereich verbunden werden. Alternativ kann der erste Deckschichteinsatz zuerst mit dem ersten Kontaktbereich und anschließend mit den beiden Kontaktbereichen verbunden werden. Alternativ kann der erste Deckschichteinsatz zuerst mit einem der beiden Kontaktbereiche verbunden werden, dann mit dem ersten Kernschichteinsatz und anschließend mit dem verbleibenden Kontaktbereich.

Gemäß einer weiteren Ausführungsform erstreckt sich der ausgehärtete Verbundplattenrohling in einer Ebene, und die Verbundplatte wird beim Überführen in den verformten Zustand um die erste Ausnehmung als Biegeachse gebogen.

Gemäß einer weiteren Ausführungsform wird der erste Kernschichteinsatz mit der zweiten Deckschicht und der Kernschicht verklebt, und der erste Deckschichteinsatz wird mit dem ersten Kernschichteinsatz verklebt.

Verkleben beutet, dass eine vordefinierte Menge eines Klebstoffes auf die entsprechenden zu verklebenden Flächen vollflächig oder auf einen Teil der Flächen aufgetragen wird. Hierbei kann der Klebstoff auf einer oder beiden jeweils angrenzenden Klebeflächen aufgetragen sein. Bevorzugt wird Kleber auf der Kernschicht und der zweiten Deckschicht und/oder auf dem Kernschichteinsatz aufgetragen, bevor der Kernschichteinsatz in der Ausnehmung angeordnet wird. Nachdem der Kernschichteinsatz angeordnet und verklebt ist, wird Kleber auf dem ersten Deckschichteinsatz und/oder auf dem ersten Kernschichteinsatz aufgetragen, bevor der erste Deckschichteinsatz angeordnet wird. Ferner kann Kleber auf den ersten Kontaktbereich und den zweiten Kontaktbereich aufgetragen werden.

In einer weiteren Ausführungsform besteht der erste Druckkörper aus einer ersten Komponente und aus einer zweiten Komponente, wobei die erste Komponente und die zweite Komponente unabhängig voneinander auf der ersten Oberfläche angeordnet werden.

In einer solchen Ausführungsform kann es bevorzugt sein, dass die erste Komponente und die zweite Komponente des ersten Druckkörpers identische Geometrien aufweisen. Der erste Druckkörper wird also aus zwei Komponenten gebildet, welche unabhängig voneinander auf der ersten Oberfläche angeordnet werden können und gemeinsam die Einheit des ersten Druckkörpers bilden. Die beiden Komponenten weisen jeweils eine Länge und eine Breite auf, wobei die Länge bevorzugt der Breite der Verbundplatte entspricht. Die beiden Komponenten werden bevorzugt so auf der ersten Oberfläche angeordnet, dass sie vollflächig in Kontakt mit der ersten Oberfläche sind. Die Breite der ersten Komponente und der zweiten Komponente liegt beispielsweise jeweils einschließlich zwischen 1 cm und 20 cm, bevorzugt zwischen 1,5 cm und 15 cm, bevorzugter zwischen 2 cm und 10 cm, noch bevorzugter zwischen 2,5 und 5 cm. Die erste Komponente und die zweite Komponente werden bevorzugt parallel zueinander angeordnet, wobei der Abstand zwischen der ersten und der zweiten Komponente frei wählbar bleibt. D. h., dass die erste und die zweite Komponente aneinander angrenzen können, sich gegenseitig überlagern können oder voneinander beabstandet sein können. Durch die erste und die zweite Komponente des Druckkörpers werden auf der ersten Oberfläche entsprechend zwei Vertiefungen gebildet, wenn jeweils eine, bevorzugt eine gleichgroße, Druckkraft auf die beiden Komponenten ausgeübt wird. Die zwei Vertiefungen werden so gebildet, wie die erste und die zweite Komponente auf der ersten Oberfläche angeordnet werden, also aneinander angrenzend oder voneinander beabstandet. Zwischen dem ersten Übergangsbereich der ersten Vertiefung und dem zweiten Übergangsbereich der weiteren Vertiefung wird anschließend die (einzelne) Ausnehmung gebildet. Hierdurch wird auf einfache Weise eine gebogene Verbundplatte erhalten. Alternativ wird jeweils eine Ausnehmung in jeder der beiden Vertiefungen gebildet, d.h. dass neben einer ersten Ausnehmung in der ersten Vertiefung innerhalb der Grenzen der zweiten Vertiefung eine zweite Ausnehmung gebildet wird. Mit der zweiten Vertiefung kann zum Herstellen einer zweiten Biegestelle so verfahren werden, wie mit der ersten Vertiefung, so dass die erhaltene Verbundplatte zweifach gebogen ist mit jeweils einer Biegung an den entsprechenden Stellen der Ausnehmungen. Die zum Abdecken der Ausnehmung und Auffüllen der Vertiefung benötigten Deckschichteinsätze liegen somit auf der Seite der ersten Oberfläche. Einzelne Abschnitte der Verbundplatte können entlang der jeweiligen Biegeachsen unabhängig voneinander in einen verformten Zustand überführt werden. Hierdurch wird eine mehrfach gebogene Verbundplatte erhalten.

In einer weiteren Ausführungsform weist das Verfahren weiter folgende Schritte auf: vor dem Aushärten des Verbundplattenrohlings, das Anordnen eines zweiten Druckkörpers auf der zweiten Oberfläche; vor dem Aushärten des Verbundplattenrohling, das Ausüben einer Druckkraft auf den zweiten Druckköper, um hierdurch eine zweite Vertiefung in der zweiten Oberfläche zu bilden; nach dem Aushärten des Verbundplattenrohlings, das Entfernen des zweiten Druckkörpers; das Bilden einer zweiten Ausnehmung in einem Bereich der zweiten Vertiefung, durch Abtragen der zweiten Deckschicht und der Kernschicht; das Überführen der Verbundplatte in einen verformten Zustand; das Anordnen eines zweiten Kernschichteinsatzes in der zweiten Ausnehmung und das Verbinden des zweiten Kernschichteinsatzes mit der zweiten Oberfläche und der Kernschicht; und das Anordnen eines zweiten Deckschichteinsatzes auf dem zweiten Kernschichteinsatz und das Verbinden des zweiten Deckschichteinsatzes mit dem zweiten Kernschichteinsatz und der zweiten Oberfläche, um die gebogene Verbundplatte zu erhalten.

Vor dem Aushärten des Verbundplattenrohlings kann es vorteilhaft sein, einen zweiten Druckkörper auf der zweiten Oberfläche anzuordnen. Durch das Anordnen des zweiten Druckkörpers auf der zweiten Oberfläche, werden an der ersten Oberfläche und der gegenüberliegenden zweiten Oberfläche jeweils eine Vertiefung (oder, je nach Ausgestaltung des Druckkörpers mit einer oder mehreren Komponenten, mehreren einzelnen Vertiefungen) in der jeweiligen Oberfläche gebildet. Der zweite Druckkörper ist ähnlich oder gleichartig ausgestaltet wie der erste Druckkörper, so dass die erste und die zweite Vertiefung gleich ausgestaltet werden. Dadurch, dass die erste Vertiefung und die zweite Vertiefung an unterschiedlichen Oberflächen gebildet werden, wird die erste Oberfläche und die zweite Oberfläche jeweils nur einmal vorübergehend geschwächt, statt die erste Oberfläche an zwei Stellen vorübergehend zu schwächen. Es wird somit eine mehrfach gebogene Verbundplatte erhalten, wobei der erste Deckschichteinsatz auf der ersten Oberfläche und der zweite Deckschichteinsatz auf der gegenüberliegenden zweiten Oberfläche angeordnet ist.

In anderen Worten kann jeder Druckkörper aus einer oder mehreren Komponenten bestehen, und im Falle, dass ein Druckkörper aus mehreren Komponenten besteht, können die Komponenten jedes Druckkörpers aneinander angrenzend oder voneinander beabstandet auf derselben Oberfläche des Verbundplattenrohlings abgelegt werden.

Beispielsweise können mehr als zwei Druckkörper vorgesehen sein. Die Anzahl der Druckkörper als solche ist nicht begrenzt und kann Werte von 1 bis beispielsweise 10 annehmen. Die Anzahl der Druckkörper bestimmt, wie oft eine durch das Verfahren hergestellte Verbundplatte gebogen werden kann.

Gemäß einem zweiten Aspekt ist eine gebogene Verbundplatte angegeben. Die gebogene Verbundplatte umfasst: eine erste Deckschicht, die eine erste Oberfläche bildet, eine zweite Deckschicht, die eine zweite Oberfläche bildet, und eine Kernschicht, wobei die Kernschicht zwischen der ersten Deckschicht und der zweiten Deckschicht angeordnet ist; wobei die Verbundplatte einen ersten Abschnitt und einen zweiten Abschnitt aufweist; wobei zwischen dem ersten Abschnitt und dem zweiten Abschnitt in der ersten Oberfläche eine erste Vertiefung angeordnet ist; wobei in einem Bereich der ersten Vertiefung die erste Deckschicht und die Kernschicht abgetragen sind, um eine erste Ausnehmung zu bilden; wobei in der ersten Ausnehmung ein erster Kernschichteinsatz angeordnet ist, wobei der erste Kernschichteinsatz mit der Kernschicht und der zweiten Deckschicht verbunden ist; wobei ein erster Deckschichteinsatz in der ersten Vertiefung angeordnet ist, wobei der erste Deckschichteinsatz mit dem ersten Kernschichteinsatz und der ersten Oberfläche verbunden ist; wobei der erste Abschnitt mit Bezug zu dem zweiten Abschnitt in einem von 0° abweichenden Winkel angeordnet ist.

Jede Verbindung zwischen einzelnen Bauteilen, d.h. aneinander angrenzende Flächen von zwei Bauteilen, ist bevorzugt verklebt. Der erste Abschnitt ist mit Bezug zu dem zweiten Abschnitt in einem von 0° abweichenden Winkel angeordnet, wobei der Winkel Werte annehmen kann von ± 180° bis 0°, bevorzugt ± 135° bis ± 2,5°, bevorzugter ± 120° bis ± 5°, weiter bevorzugt ± 90° bis ± 7,5°, und noch bevorzugter ± 75° bis ± 10°. Die gebogene Verbundplatte ist in dieser Ausführungsform einmal an der Ausnehmung gebogen, wobei die gebogene Verbundplatte auch mehrfach gebogen sein kann. In beispielhaften Ausführungsformen ist die Verbundplatte zweifach, dreifach, vierfach, fünffach oder sechsfach gebogen.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: Fig. 1 zeigt eine schematische Querschnittsdarstellung eines Verbundplattenrohlings.
- Fig. 2A: Fig. 2A zeigt eine schematische Querschnittsdarstellung des Verbundplattenrohlings mit einem auf einer ersten Oberfläche angeordneten Druckkörper.
- Fig. 2B: Figur 2B zeigt eine schematische Querschnittsdarstellung des Verbundplattenrohlings mit einem Druckkörper bestehend aus zwei Komponenten, die auf dem Verbundplattenrohling angeordnet sind.
- Fig. 3: Fig. 3 zeigt eine schematische Querschnittsdarstellung einer Verbundplatte nach dem Aushärten des Verbundplattenrohlings und nach dem Entfernen des Druckkörpers.
- Fig. 4: Fig. 4 zeigt eine schematische Querschnittsdarstellung der Verbundplatte nach dem Bilden einer ersten Ausnehmung.
- Fig. 5: Fig. 5 zeigt eine schematische Querschnittsdarstellung der Verbundplatte mit der ersten Ausnehmung nach dem Überführen der Verbundplatte in einen verformten Zustand.
- Fig. 6: Fig. 6 zeigt eine schematische Querschnittsdarstellung der Verbundplatte nach dem Anordnen eines ersten Kernschichteinsatzes.
- Fig. 7: Fig. 7 zeigt eine schematische Querschnittsdarstellung der Verbundplatte nach dem Anordnen eines ersten Deckschichteinsatzes.
- Fig. 8: Fig. 8 zeigt schematisch die Schritte des Verfahrens.

### Detaillierte Beschreibung

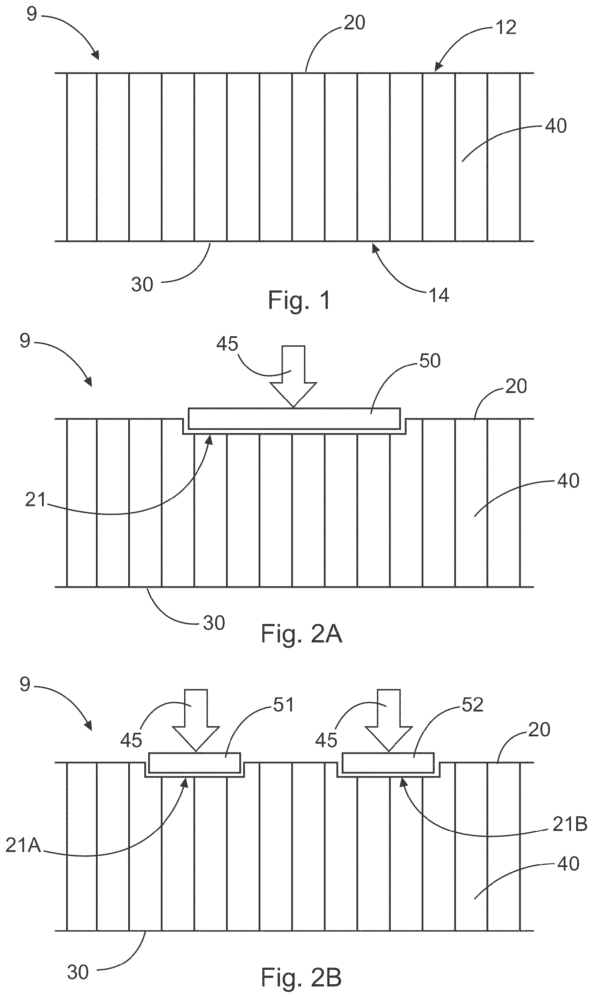

Fig. 1 zeigt eine schematische Querschnittsdarstellung eines Verbundplattenrohlings 9. Der Verbundplattenrohling weist eine Kernschicht 40 auf, wobei die Kernschicht 40 zwischen einer ersten Deckschicht 20 und einer zweiten Deckschicht 30 angeordnet ist. Die erste Deckschicht 20 weist eine erste Oberfläche 12 auf. Die zweite Deckschicht 30 weist eine zweite Oberfläche 14 auf. Die erste Deckschicht 20 ist gegenüberliegend zu der zweiten Deckschicht 30 angeordnet.

Fig. 2A zeigt eine schematische Querschnittsdarstellung des Verbundplattenrohlings 9 mit einem auf der ersten Oberfläche 12 angeordneten Druckkörper 50. Auf den Druckkörper 50 wird eine Druckkraft 45 ausgeübt, wodurch eine Vertiefung 21 in der ersten Oberfläche 12 gebildet wird. Der Druckkörper komprimiert die erste Deckschicht 20 und die Kernschicht 40 bzw. verdrängt einen Teil des Materials, um die Vertiefung 21 zu bilden.

Fig. 2B zeigt eine schematische Querschnittsdarstellung des Verbundplattenrohlings 9 mit einem auf der ersten Oberfläche 12 angeordneten Druckkörper, der aus einer ersten Komponente 51 und einer zweiten Komponente 52 besteht. Die erste Komponente 51 und die zweite Komponente 52 sind voneinander beabstandet auf der ersten Oberfläche 12 angeordnet. Auf die erste Komponente 51 und auf die zweite Komponente 52 wird jeweils eine Druckkraft 45 ausgeübt, wodurch eine erste Vertiefung 21A und eine zweite Vertiefung 21B in der ersten Oberfläche 12 gebildet wird.

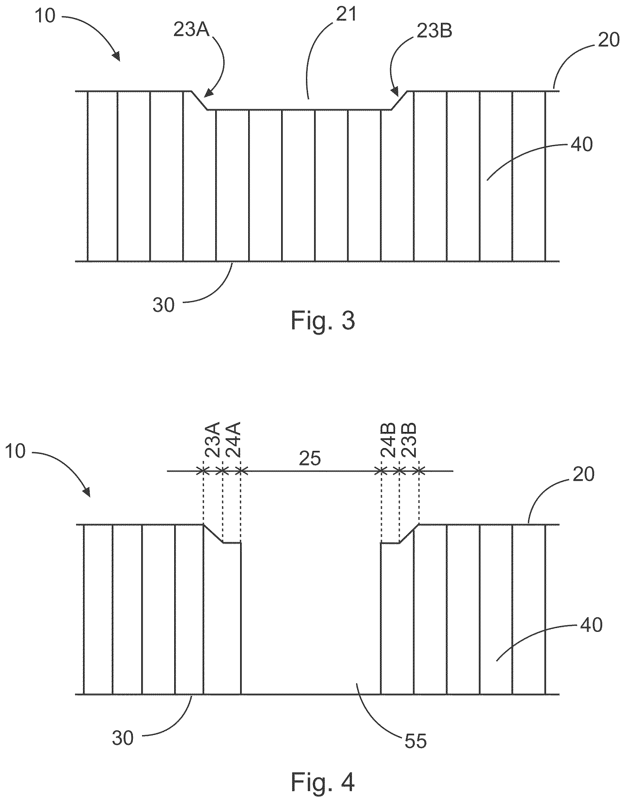

Fig. 3 zeigt eine schematische Querschnittsdarstellung einer Verbundplatte 10 nach dem Aushärten des Verbundplattenrohlings 9 und nach dem Entfernen des Druckkörpers 50. Die Vertiefung 21 ist in der ersten Oberfläche 12 und damit in der ersten Deckschicht 20 sowie teilweise in der Kernschicht 40 angeordnet. An den Bereichen zwischen der ersten Oberfläche 12 und der Vertiefung 21 sind jeweils Kanten der Vertiefung angeordnet. Die Kanten bilden jeweils einen ersten Übergangsbereich 23A und einen zweiten Übergangsbereich 23B. Der erste Übergangsbereich 23A und der zweite Übergangsbereich 23B sind in einem Winkel im Bezug zu der Vertiefung 21 und der ersten Deckschicht 20 angeordnet.

Fig. 4 zeigt eine schematische Querschnittsdarstellung der Verbundplatte 10 nach dem Bilden einer ersten Ausnehmung 55. Die Ausnehmung 55 ist innerhalb der Vertiefung 21 angeordnet und reicht ausgehend von der ersten Deckschicht 20 bis zu der zweiten Deckschicht 30, somit ist in diesem Bereich die Kernschicht 40 vollständig entfernt. Die Ausnehmung 55 weist eine Breite 25 auf, wobei die Breite 25 kleiner ist als der Abstand zwischen dem ersten Übergangsbereich 23A und dem zweiten Übergangsbereich 23B. Zwischen dem ersten Übergangsbereich 23A und der Ausnehmung 55 ist ein erster Kontaktbereich 24A angeordnet.

Zwischen dem zweiten Übergangsbereich 23B und der Ausnehmung 55 ist ein zweiter Kontaktbereich 24B angeordnet. Der erste Kontaktbereich 24A und der zweite Kontaktbereich 24B resultieren aus der Oberfläche der ursprünglichen Vertiefung 21.

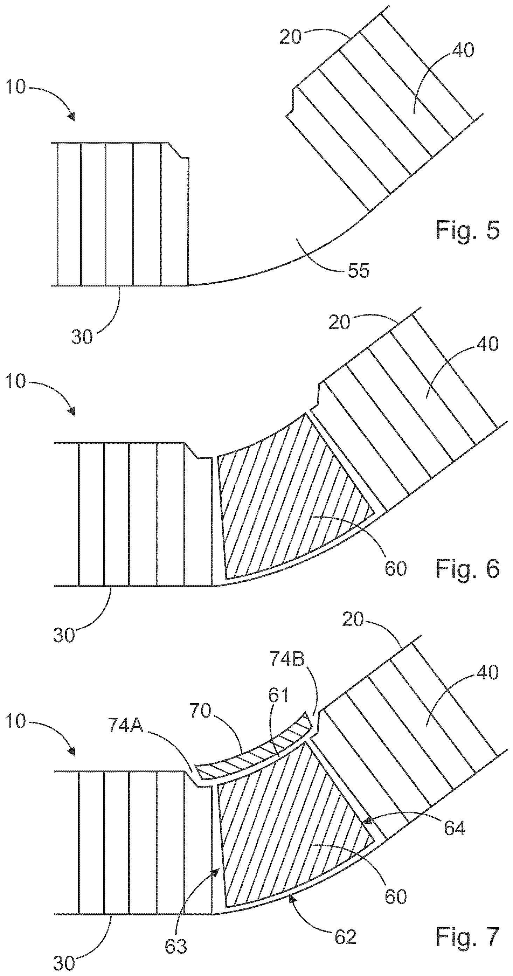

Fig. 5 zeigt eine schematische Querschnittsdarstellung der Verbundplatte 10 mit der ersten Ausnehmung 55 nach dem Überführen der Verbundplatte in einen verformten Zustand. Die zweite Deckschicht 30 fungiert als Biegeachse, so dass die Verbundplatte 10 mit einem ersten Abschnitt (links der Ausnehmung) gewinkelt zu einem zweiten Abschnitt (rechts der Ausnehmung) angeordnet ist.

Fig. 6 zeigt eine schematische Querschnittsdarstellung der Verbundplatte 10 nach dem Anordnen eines ersten Kernschichteinsatzes 60 in der Ausnehmung 55. Der Kernschichteinsatz 60 ist in der ersten Ausnehmung 55 angeordnet und kontaktiert die zweite Deckschicht 30 mit einer Seite und die Kernschicht 40 mit zwei Seiten. An den Stellen, in denen der Kernschichteinsatz 60 die zweite Deckschicht 30 und die Kernschicht 40 kontaktiert, ist ein Kleber flächig aufgetragen.

Fig. 7 zeigt eine schematische Querschnittsdarstellung der Verbundplatte 10 nach dem Anordnen eines ersten Deckschichteinsatzes 70. Der erste Deckschichteinsatz 70 ist in der ursprünglichen Vertiefung 21 angeordnet. Der Deckschichteinsatz 70 kontaktiert mit einem Abschnitt den Kernschichteinsatz 60 an einer ersten Fläche 61 und jeweils den ersten Kontaktbereich 24A und den zweiten Kontaktbereich 24B. Zwischen dem ersten Deckschichteinsatz 70 und dem ersten Übergangsbereich 23A ist ein erster Spalt 74A ausgebildet. Zwischen dem ersten Deckschichteinsatz 70 und dem zweiten Übergangsbereich 23B ist ein zweiter Spalt 74B angeordnet. Der erste Spalt 74A und der zweite Spalt 74B können mit einer Füllmasse aufgefüllt werden, bis die Höhe der Oberfläche der ersten Deckschicht 20 und des ersten Deckschichteinsatzes 70 erreicht ist. Der Kernschichteinsatz 60 kontaktiert mit der ersten Fläche 61 den ersten Deckschichteinsatz 70 und mit einer zweiten Fläche 62 die zweite Deckschicht.

Ferner kontaktiert der Kernschichteinsatz 60 jeweils mit einer dritten Fläche 63 und einer vierten Fläche 64 die Kernschicht. Auf der ersten Fläche 61, der zweiten Fläche 62, der dritten Fläche 63 und der vierten Fläche 64 kann ein Klebemittel oder eine Füllmasse aufgebracht sein.

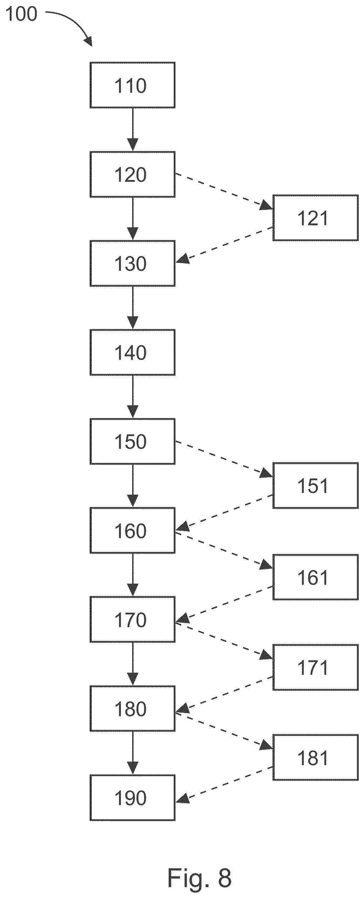

Fig. 8 zeigt schematisch die Schritte des Verfahrens.

Im ersten Schritt 110 wird der Verbundplattenrohling 9 bereitgestellt und in ein entsprechendes Verarbeitungswerkzeug eingelegt und gegebenenfalls eingespannt.

Im zweiten Schritt 120, vor dem Aushärten, wird der erste Druckkörper 50 auf der ersten Oberfläche 12 des Verbundplattenrohlings 9 angeordnet und die Druckkraft 45 auf den Druckkörper 50 ausgeübt, wodurch die Vertiefung 21 in der ersten Oberfläche 12 gebildet wird. In einem weiteren Schritt 121, vor dem Aushärten, kann ein zweiter Druckkörper auf der ersten Oberfläche 12 oder auf der zweiten Oberfläche 14 angeordnet werden, wodurch eine zweite Vertiefung 21B gebildet wird.

Im dritten Schritt 130 wird der Verbundplattenrohling 9, aufweisend die eine Vertiefung 21 oder die mehreren Vertiefungen 21A, 21B, ausgehärtet.

Im vierten Schritt 140 wird der erste Druckkörper 50 entfernt.

Im fünften Schritt 150 wird die erste Ausnehmung 55 im Bereich der ersten Vertiefung 21A durch Abtragen der ersten Deckschicht 20 und der Kernschicht 40 gebildet. In einem weiteren Schritt 151 kann eine zweite Ausnehmung 55 gebildet werden.

Im sechsten Schritt 160 wird die Verbundplatte 10 in den verformten Zustand überführt. In einem weiteren Schritt 161 kann die Verbundplatte 10 weiter verformt werden.

Im siebten Schritt 170 wird der erste Kernschichteinsatz 60 in der ersten Ausnehmung 55 angeordnet und der erste Kernschichteinsatz 60 mit der zweiten Deckschicht 30 und der Kernschicht 40 verbunden. In einem weiteren Schritt 171 kann ein zweiter Kernschichteinsatz 60 in der zweiten Ausnehmung angeordnet werden.

Im achten Schritt 180 wird der erste Deckschichteinsatz 70 auf dem ersten Kernschichteinsatz 60 angeordnet und der Deckschichteinsatz 70 wird mit dem ersten Kernschichteinsatz 60 und der ersten Oberfläche 12 verbunden, um die gebogene Verbundplatte 10 zu erhalten und das Verfahren abzuschließen 190. In einem weiteren Schritt 181 wird der zweite Deckschichteinsatz 70 auf dem zweiten Kernschichteinsatz 60 angeordnet und mit dem zweiten Kernschichteinsatz 60 und der zweiten Oberfläche 14 verbunden, um die gebogene Verbundplatte 10 zu erhalten und das Verfahren wird abgeschlossen 190.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 9: Verbundplattenrohling
- 10: Verbundplatte
- 12: erste Oberfläche
- 14: zweite Oberfläche
- 20: erste Deckschicht
- 21: Vertiefung
- 21A: erste Vertiefung
- 21B: zweite Vertiefung
- 23A: erster Übergangsbereich
- 23B: zweiter Übergangsbereich
- 24A: erster Kontaktbereich
- 24B: zweiter Kontaktbereich
- 30: zweite Deckschicht
- 40: Kernschicht
- 45: Druckkraft
- 50: Druckkörper
- 51: erste Komponente
- 52: zweite Komponente
- 55: Ausnehmung
- 60: Kernschichteinsatz
- 61: erste Fläche
- 62: zweite Fläche
- 63: dritte Fläche
- 64: vierte Fläche
- 70: Deckschichteinsatz
- 74A: erster Spalt
- 74B: zweiter Spalt
- 100: Verfahren

## Patentansprüche

1. Verfahren (100) zum Herstellen einer gebogenen Verbundplatte (10), das Verfahren (100) umfassend die Schritte:
Bereitstellen eines Verbundplattenrohlings (9), wobei der Verbundplattenrohling (9) eine erste Deckschicht (20) mit einer ersten Oberfläche (12), eine zweite Deckschicht (30) mit einer zweiten Oberfläche (14) und eine Kernschicht (40) umfasst;
Anordnen eines ersten Druckkörpers (50) auf der ersten Oberfläche (12);
Ausüben einer Druckkraft (45) auf den ersten Druckkörper (50), um hierdurch eine erste Vertiefung (21) in der ersten Oberfläche (12) zu bilden;
Aushärten des Verbundplattenrohlings (9), um eine Verbundplatte (10) zu erhalten;
Entfernen des ersten Druckkörpers (50);
Bilden einer ersten Ausnehmung (55) in einem Bereich der ersten Vertiefung (21) durch Abtragen der ersten Deckschicht (20) und der Kernschicht (40);
Überführen der Verbundplatte (10) in einen verformten Zustand;
Anordnen eines ersten Kernschichteinsatzes (60) in der ersten Ausnehmung (55) und Verbinden des ersten Kernschichteinsatzes (60) mit der zweiten Deckschicht (30) und der Kernschicht (40);
Anordnen eines ersten Deckschichteinsatzes (70) auf dem ersten Kernschichteinsatz (60) und Verbinden des ersten Deckschichteinsatzes (70) mit dem ersten Kernschichteinsatz (60) und der ersten Oberfläche (12), um die gebogene Verbundplatte (10) zu erhalten.

2. Verfahren (100) nach Anspruch 1,
wobei der Schritt des Ausübens der Druckkraft (45) auf den ersten Druckkörper (50) vor und/oder während des Aushärtens des Verbundplattenrohlings (9) durchgeführt wird.

3. Verfahren (100) nach Anspruch 1 oder 2,
wobei die erste Vertiefung (21) einen ersten Übergangsbereich (23A) und einen zweiten Übergangsbereich (23B) aufweist, und wobei die erste Ausnehmung (55) eine Breite (25) aufweist, die kleiner ist als ein Abstand zwischen dem ersten Übergangsbereich (23A) und dem zweiten Übergangsbereich (23B).

4. Verfahren (100) nach einem der voranstehenden Ansprüche,
wobei die erste Ausnehmung (55) zwischen einem ersten Kontaktbereich (24A) und einem zweiten Kontaktbereich (24B) angeordnet ist, wobei der erste Kontaktbereich (24A) an den ersten Übergangsbereich (23A) angrenzt und der zweite Kontaktbereich (24B) an den zweiten Übergangsbereich (23B) angrenzt.

5. Verfahren (100) nach Anspruch 4,
wobei der erste Deckschichteinsatz (70) mit dem ersten Kernschichteinsatz (60), dem ersten Kontaktbereich (24A) und dem zweiten Kontaktbereich (24B) verbunden wird.

6. Verfahren (100) nach einem der voranstehenden Ansprüche,
wobei sich der ausgehärtete Verbundplattenrohling (9) in einer Ebene erstreckt, und die Verbundplatte (10) beim Überführen in den verformten Zustand um die erste Ausnehmung (55) als Biegeachse gebogen wird.

7. Verfahren (100) nach einem der voranstehenden Ansprüche,
wobei der erste Kernschichteinsatz (60) mit der zweiten Deckschicht (30) und der Kernschicht (40) verklebt wird, und der erste Deckschichteinsatz (70) mit dem ersten Kernschichteinsatz (60) verklebt wird.

8. Verfahren (100) nach einem der voranstehenden Ansprüche,
wobei der erste Druckkörper (50) aus einer ersten Komponente (51) und aus einer zweiten Komponente (52) besteht, wobei die erste Komponente und die zweite Komponente unabhängig voneinander auf der ersten Oberfläche (12) angeordnet werden.

9. Verfahren (100) nach einem der voranstehenden Ansprüche, weiter aufweisend die Schritte:
vor dem Aushärten des Verbundplattenrohlings (9), Anordnen eines zweiten Druckkörpers (50) auf der zweiten Oberfläche (14);
vor dem Aushärten des Verbundplattenrohling (9), Ausüben einer Druckkraft (45) auf den zweiten Druckköper, um hierdurch eine zweite Vertiefung (21) in der zweiten Oberfläche (14) zu bilden;
nach dem Aushärten des Verbundplattenrohlings (9), Entfernen des zweiten Druckkörpers (45);
Bilden einer zweiten Ausnehmung (55) in einem Bereich der zweiten Vertiefung (21), durch Abtragen der zweiten Deckschicht (20) und der Kernschicht (40);
Überführen der Verbundplatte (10) in einen verformten Zustand;
Anordnen eines zweiten Kernschichteinsatzes (60) in der zweiten Ausnehmung (55) und Verbinden des zweiten Kernschichteinsatzes (60) mit der zweiten Oberfläche (14) und der Kernschicht (40); und
Anordnen eines zweiten Deckschichteinsatzes (70) auf dem zweiten Kernschichteinsatz (60) und Verbinden des zweiten Deckschichteinsatzes (70) mit dem zweiten Kernschichteinsatz (60) und der zweiten Oberfläche (14), um die gebogene Verbundplatte (10) zu erhalten.

10. Gebogene Verbundplatte (10), aufweisend:
eine erste Deckschicht (20), die eine erste Oberfläche (12) bildet, eine zweite Deckschicht (30), die eine zweite Oberfläche (14) bildet, und eine Kernschicht (40), wobei die Kernschicht (40) zwischen der ersten Deckschicht (20) und der zweiten Deckschicht (30) angeordnet ist;
wobei die Verbundplatte (10) einen ersten Abschnitt und einen zweiten Abschnitt aufweist;
wobei zwischen dem ersten Abschnitt und dem zweiten Abschnitt in der ersten Oberfläche (12) eine erste Vertiefung (21) angeordnet ist;
wobei in einem Bereich der ersten Vertiefung (21) die erste Deckschicht (20) und die Kernschicht (40) abgetragen sind, um eine erste Ausnehmung (55) zu bilden;
wobei in der ersten Ausnehmung (55) ein erster Kernschichteinsatz (60) angeordnet ist, wobei der erste Kernschichteinsatz (60) mit der Kernschicht (40) und der zweiten Deckschicht (30) verbunden ist;
wobei ein erster Deckschichteinsatz (70) in der ersten Vertiefung (21) angeordnet ist, wobei der erste Deckschichteinsatz (70) mit dem ersten Kernschichteinsatz (60) und der ersten Oberfläche (12) verbunden ist;
wobei der erste Abschnitt mit Bezug zu dem zweiten Abschnitt in einem von 0° abweichenden Winkel angeordnet ist.
